# EUROPÄISCHE PATENTSCHRIFT

(11) **EP 2 847 554 B1**
(45) Veröffentlichungstag und Bekanntmachung des Hinweises auf die Patenterteilung: **21.12.2016**
(21) Anmeldenummer: 13724747.4
(22) Anmeldetag: 06.05.2013
(51) Int. Cl.: G01F 23/296

(54) **VERFAHREN ZUM MESSEN DES FÜLLSTANDES EINER FLÜSSIGKEIT**
METHOD FOR MEASURING THE FLUID LEVEL
PROCÉDÉ DE MESURE DU NIVEAU D'UN LIQUIDE

(30) Priorität: 09.05.2012 DE 102012207724
(43) Veröffentlichungstag der Anmeldung: 18.03.2015
(73) Patentinhaber: Continental Automotive GmbH, 30165 Hannover (DE)
(72) Erfinder: GRASS, Philippe, 93053 Regensburg (DE); HEINRICH, Stephan, 84076 Pfeffenhausen (DE); HERRMANN, Markus, 93051 Regensburg (DE); REITMEIER, Torsten, 92442 Wackersdorf (DE); SCHÄDLICH, Denny, 08223 Neustadt (DE)
(86) Internationale Anmeldenummer: PCT/EP2013/059343
(87) Internationale Veröffentlichungsnummer: WO 2013/167512

(56) Entgegenhaltungen:
- US-A- 4 596 144
- US-A- 4 748 846
- US-B1- 7 421 895

## Beschreibung

Die vorliegende Erfindung betrifft ein Verfahren zum Messen des Füllstandes einer Flüssigkeit in einem Gehäuse mithilfe eines Ultraschallsensors, bei dem die Messung entlang einer Messstrecke erfolgt, auf der sich ein Referenzpunkt befindet, und bei der in Bezug auf das vom Referenzpunkt reflektierte Signal Mehrfachechos und in Bezug auf das vom Flüssigkeitspegel reflektierte Signal durch Mehrfachmessungen Levelechos, die sich im zeitlichen Bereich der Mehrfachechos befinden, erzeugt werden.

Bei derartigen Füllstandsmessungen werden heutzutage Ultraschallsensoren eingesetzt. Diese messen die Ultraschalllaufzeit vom Sensor bis zu einem Referenzpunkt auf einer Messstrecke, bei dem es sich in der Regel um einen Reflektor handelt. Mithilfe der bekannten Weglänge vom Sensor bis zum Referenzpunkt und der gemessenen Laufzeit wird dann beispielsweise die Schallgeschwindigkeit berechnet. Es versteht sich, dass hierbei die Strecke zwischen Messgehäuse und Referenzpunkt mit Flüssigkeit gefüllt sein muss.

Bei der eigentlichen Füllstandsmessung wird die Ultraschalllaufzeit zwischen Sensor und dem Füllstandspegel gemessen. Mithilfe der über die vorstehend beschriebene Referenzmessung ermittelten Schallgeschwindigkeit kann dann nach der einfachen Formel s = t*v der Füllstand ermittelt werden.

Bei der durchgeführten Laufzeitmessung werden daher sowohl vom Referenzpunkt als auch vom Flüssigkeitspegel Signalechos erzeugt. Hierbei werden in Bezug auf die Referenzechos Mehrfachechos erzeugt, das heißt, es entstehen Ping-Pong-Echos zwischen dem Wandler des Ultraschallsensors und dem Referenzpunkt. Diese Echos folgen aufeinander immer im gleichen Abstand gemäß einem Vielfachen der Strecke Wandler - Referenzpunkt.

Hierbei entsteht das Problem, dass das zu messende Pegelsignal (Levelsignal) zeitlich innerhalb der Mehrfachechos vom Referenzpunkt liegt. Es ist hierbei nicht ohne Weiteres möglich, zwischen den verschiedenen Signalen (Mehrfach- und Levelechos) zu unterscheiden, so dass es mangels einer genauen Identifizierung des Levelechos zu Fehlmessungen kommen kann.

Aus der US 4 748 846 A ist ein Verfahren zum Messen des Füllstandes einer Flüssigkeit in einem Gehäuse mithilfe eines Ultraschallsensors bekannt. Hierbei erfolgt die Messung entlang einer Messstrecke, auf der sich ein Referenzpunkt befindet und bei der in Bezug auf das vom Referenzpunkt reflektierte Signal Mehrfachechos und in Bezug auf das vom Flüssigkeitspegel reflektierte Signal durch Mehrfachmessung Levelechos, die sich im zeitlichen Bereich der Mehrfachechos befinden, erzeugt werden. Um die Levelechos zu ermitteln, wird in einem Empfänger ein Schwellenwert eingestellt, der schrittweise so lange immer niedriger eingestellt wird, bis ein Signalecho erfasst wird. Da die Referenzpunkte (Reflektoren) so ausgebildet sind, dass die Amplitude ihrer Echos ausreichend niedriger ist als die Amplitude der Levelechos, wird davon ausgegangen, dass das durch die schrittweise Absenkung des Schwellenwertes zuerst ermittelte Signal ein Levelecho ist. Mithilfe der anhand des Referenzpunktes ermittelten Schallgeschwindigkeit kann aus der zugehörigen Laufzeit der Füllstand bestimmt werden.

Aus der US 4 596 144 A ist es bekannt, eine Füllstandsmessung durchzuführen, wobei empfangene Signalechos mit Schwellenwerten verglichen werden. Mithilfe dieser Schwellenwerte wird entschieden, ob es sich bei den empfangenen Signalechos um Levelechos oder Nebenechos handelt.

Aus der US 7 421 895 B1 ist es bekannt, eine Füllstandsmessung an einem in einem Fahrzeug befindlichen Flüssigkeitsgehäuse durchzuführen.

Der vorliegenden Erfindung liegt die Aufgabe zugrunde, ein Verfahren der eingangs beschriebenen Art zu schaffen, mit dem eine besonders exakte Messung des Füllstandes möglich ist.

Diese Aufgabe wird erfindungsgemäß bei einem Verfahren der angegebenen Art durch die folgenden Schritte gelöst:
- Bestimmen der Amplitude der Signalechos und speichern derselben;
- Prüfen der Amplituden, ob diese in einem festgelegten Schwankungsbereich für die Mehrfachechos vom Referenzpunkt oder in einem festgelegten Schwankungsbereich für die Levelechos liegen;
- Erfassen der im Schwankungsbereich für die Levelechos liegenden Signalechos als Levelsignale und ermitteln des Füllstandes aus der zugehörigen Laufzeit unter Berücksichtigung der aus der Laufzeit bis zum Referenzpunkt ermittelten Schallgeschwindigkeit.

Das erfindungsgemäße Verfahren basiert auf folgenden Überlegungen. Die Referenz-Mehrfachechos (Mehrfachecho vom Referenzpunkt) entstehen durch Reflektionen am Referenzpunkt, der von einem geeigneten Reflektor gebildet wird. Der Referenzpunkt befindet sich permanent in der zu messenden Flüssigkeit, so dass die Reflektion ständig konstant und stabil ist, das heißt, der Reflektionswinkel an der Referenzfläche ist ständig der gleiche. Die Amplituden der Mehrfachechos schwanken daher in der Höhe nur um wenige Prozent.

Bei der Messung des Füllstandes (Pegels, Levels) wird der Ultraschall an der Oberfläche der Flüssigkeit reflektiert. Die Flüssigkeitsoberfläche ist jedoch Schwankungen ausgesetzt. Somit ist die Reflektion an der Oberfläche der Flüssigkeit nicht konstant, und es ändert sich bei jeder Messung der Reflektionswinkel.

Die Amplitude des Levelechos schwankt daher relativ stark, beispielsweise von 0 V bis 5 V. Die vorliegende Erfindung macht sich diese unterschiedlichen Schwankungsbreiten zunutze. Bei der Durchführung der Messung wird die Amplitude (Höhe der Amplitude) (VPeak) der Signalechos, insbesondere von jedem Echo, bestimmt und die Amplituden werden gespeichert. Es wird dann geprüft, ob die gespeicherten Amplituden in einem festgelegten Schwankungsbereich für die Mehrfachechos vom Referenzpunkt oder in einem festgelegten Schwankungsbereich für die Levelechos liegen. Die im Schwankungsbereich für die Levelechos liegenden Signalechos werden als Levelsignale erfasst. Es ist somit auf diese Weise eine Plausibilisierung der einzelnen Echos möglich.

Nach dem auf diese Weise durchgeführten Identifizieren der Levelsignale wird der Füllstand ermittelt. Hierbei wird aus der gemessenen Laufzeit unter Berücksichtigung der aus der gemessenen Laufzeit bis zum Referenzpunkt ermittelten Schallgeschwindigkeit der Füllstand ermittelt.

Bei einer speziellen Ausführungsform des erfindungsgemäßen Verfahrens wird die Füllstandsmessung an einem in einem Fahrzeug befindlichen Flüssigkeitsgehäuse durchgeführt. Durch die Bewegung des Fahrzeuges schwankt hierbei die Flüssigkeitsoberfläche ständig, so dass eine entsprechend große Schwankungsbreite des Levelechos resultiert, da sich bei jeder Messung der Reflektionswinkel entsprechend verändert.

Bei dem erfindungsgemäßen Verfahren werden somit Mehrfachmessungen durchgeführt, die, verglichen mit den Mehrfachechos der Referenzsignale, durch Schwankungen des Flüssigkeitsspiegels zu Levelechos mit großer Schwankungsbreite führen, wobei durch diese große Schwankungsbreite eine Identifizierung der Levelechos zwischen den Mehrfachechos der Referenzsignale möglich ist.

Was die festgelegten Schwankungsbereiche anbetrifft, so wird vorzugsweise mit einem Schwankungsbereich für die Mehrfachechos vom Referenzpunkt von +/- 20 mV und mit einem Schwankungsbereich für die Levelechos von 0 - 3 V gearbeitet. Was die Referenzechos anbetrifft, so wird vorzugsweise von den Mehrfachechos vom Referenzpunkt nur vom zweiten Echo an die Amplitudenauswertung durchgeführt. Die Amplituden dieser Echos schwanken in der Tat nur um wenige Prozent, so dass eine deutliche Abgrenzung gegenüber den Levelechos erreichbar ist.

Die Erfindung wird nachfolgend anhand eines Ausführungsbeispiels in Verbindung mit der Zeichnung im Einzelnen erläutert. Es zeigen:
- Figur 1: auf schematische Weise das Prinzip einer Füllstandsmessung;
- Figur 2: die aus der Referenzmessung resultierenden Signalmehrfachechos mit einem Levelecho und
- Figur 3: ein Diagramm, das die Schwankungsbreiten der Amplituden der einzelnen Echos zeigt.

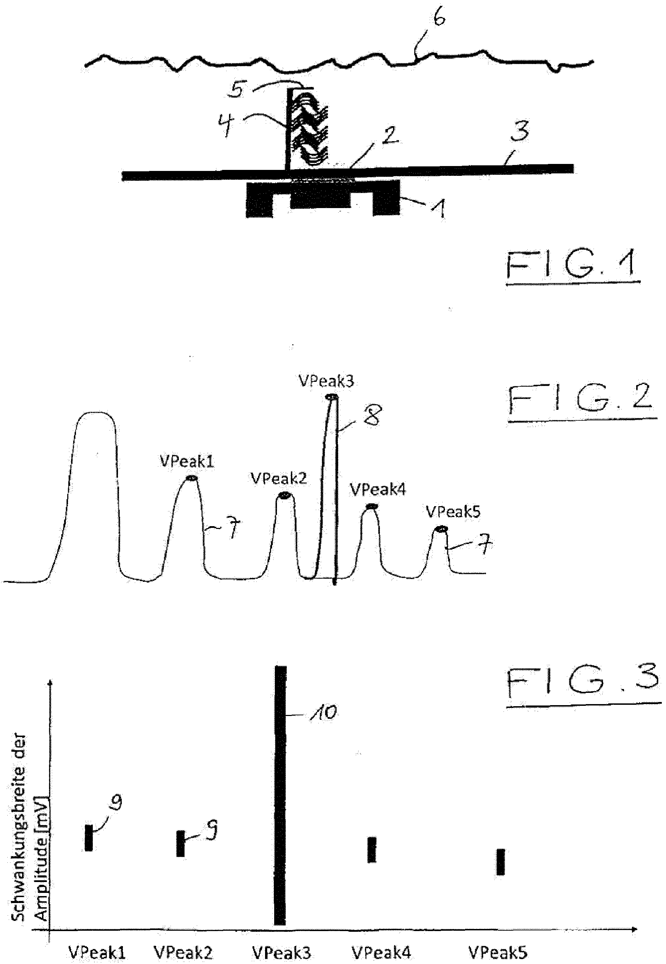

Figur 1 zeigt schematisch den Boden eines Gehäuses 3, das mit einer Flüssigkeit gefüllt ist, wobei die Oberfläche der Flüssigkeit bei 6 angedeutet ist. Der Stand bzw. die Höhe dieser Flüssigkeit im Gehäuse 3 soll gemessen werden.

Für die Messung findet ein Ultraschallsensor Verwendung, dessen Wandler bei 1 schematisch angedeutet ist. Der Wandler 1 steht über ein Kopplungsmittel 2 mit dem Boden des Gehäuses 3 in Verbindung. Bei 4 ist eine Messstrecke für den Ultraschallsensor dargestellt, an deren Ende sich ein Referenzpunkt 5 in der Form eines Reflektors befindet. Die Ultraschalllaufzeit bis zum Referenzpunkt 5 und weiter bis zur Oberfläche 6 der Flüssigkeit wird gemessen. Da der Abstand des Referenzpunktes 5 vom Wandler 1 bekannt ist, kann aus der Ultraschalllaufzeit bis zum Referenzpunkt 5 die Schallgeschwindigkeit der Flüssigkeit ermittelt werden. Mithilfe der auf diese Weise ermittelten Schallgeschwindigkeit und der Ultraschalllaufzeit bis zur Oberfläche 6 der Flüssigkeit wird dann der Füllstand (die Höhe der Flüssigkeit) im Gehäuse ermittelt.

Figur 1 zeigt ferner schematisch die bis zum Referenzpunkt 5 ausgesendeten und vom Referenzpunkt 5 reflektierten Ultraschallwellen.

Bei der durchgeführten Ultraschallmessung entstehen Referenz-Mehrfachechos (d. h. Ping-Pong-Echos) zwischen Ultraschallwandler 1 und Referenzpunkt 5. Diese Mehrfachechos sind in Figur 2 mit 7 bezeichnet. Das zu messende Füllstandssignal (Levelsignal) 8 liegt zeitlich innerhalb dieser Mehrfachechos 7, wobei es nicht ohne Weiteres möglich ist, zwischen den verschiedenen Mehrfach- und Levelechos 7, 8 zu unterscheiden.

Bei der Durchführung von mehreren Füllstandsmessungen entstehen Levelechos 8, die sich aufgrund von Schwankungen des Füllstandes der Flüssigkeit relativ stark ändern. Derartige Schwankungen werden beispielsweise durch die Bewegung eines Fahrzeuges verursacht, in dem sich das die Flüssigkeit aufnehmende Gehäuse befindet. Die Schwankungen der Levelechos 8 sind auf jeden Fall viel größer als die der Mehrfachechos 7 der Referenzmessung.

Es werden nunmehr die Amplituden der verschiedenen Signalechos (Mehrfachechos und Levelechos) 7,8 gemessen und gespeichert. Durch Auswertung der Schwankungsbreite der Amplituden ist dann eine Plausibilisierung der einzelnen Echos möglich. So wird geprüft, ob die Amplituden der jeweiligen Echos in einem festgelegten Schwankungsbereich für die Mehrfachechos vom Referenzpunkt oder in einem festgelegten Schwankungsbereich für die Levelechos liegen. Die im Schwankungsbereich für die Levelechos liegenden Signalechos werden als Levelsignale 8 erfasst. Figur 3 zeigt ein Diagramm, in dem die jeweiligen Schwankungsbreiten 9 der Amplituden der Mehrfachechos und die Schwankungsbreite 10 der Amplitude des Levelechos 8 dargestellt sind. Von den Mehrfachechos 7 sind in Figur 2 die Amplituden VPeak 1, VPeak 2, VPeak 4, VPeak 5 des zweiten bis fünften Mehrfachechos 7 dargestellt. Ferner die Amplitude VPeak 3 eines Levelechos 8.

Nach Identifizierung der Levelechos 8 kann der Füllstand aus der zugehörigen Laufzeit unter Berücksichtigung der aus der Laufzeit bis zum Referenzpunkt ermittelten Schallgeschwindigkeit berechnet werden.

## Patentansprüche

1. Verfahren zum Messen des Füllstandes einer Flüssigkeit in einem Gehäuse mithilfe eines Ultraschallsensors, bei dem die Messung entlang einer Messstrecke erfolgt, auf der sich ein Referenzpunkt befindet, und bei der in Bezug auf das vom Referenzpunkt reflektierte Signal Mehrfachechos und in Bezug auf das vom Flüssigkeitspegel reflektierte Signal durch Mehrfachmessungen Levelechos, die sich im zeitlichen Bereich der Mehrfachechos befinden, erzeugt werden, mit den folgenden Schritten:
• Bestimmen der Amplitude der Signalechos und speichern derselben;
• Prüfen der Amplituden, ob diese in einem festgelegten Schwankungsbereich für die Mehrfachechos vom Referenzpunkt oder in einem festgelegten Schwankungsbereich für die Levelechos liegen und
• Erfassen der im Schwankungsbereich für die Levelechos liegenden Signalechos als Levelsignale und ermitteln des Füllstandes aus der zugehörigen Laufzeit unter Berücksichtigung der aus der Laufzeit bis zum Referenzpunkt ermittelten Schallgeschwindigkeit.

2. Verfahren nach Anspruch 1, **dadurch gekennzeichnet, dass** die Füllstandsmessung an einem in einem Fahrzeug befindlichen Flüssigkeitsgehäuse durchgeführt wird.

3. Verfahren nach Anspruch 1 oder 2, **dadurch gekennzeichnet, dass** mit einem festgelegten Schwankungsbereich für die Mehrfachechos vom Referenzpunkt von +/- 20 mV gearbeitet wird.

4. Verfahren nach einem der vorangehenden Ansprüche, **dadurch gekennzeichnet, dass** mit einem festgelegten Schwankungsbereich für die Levelechos von 0 - 3 V gearbeitet wird.

5. Verfahren nach einem der vorangehenden Ansprüche, **dadurch gekennzeichnet, dass** von den Mehrfachechos vom Referenzpunkt nur vom zweiten Echo an die Amplitudenauswertung durchgeführt wird.

## Claims

1. Method for measuring the fill level of a fluid in a housing by using an ultrasound sensor, in which the measurement is carried out along a measurement path on which there is a reference point, and in which multiple echoes in relation to the signal reflected from the reference point and level echoes in relation to the signal reflected from the fluid level as a result of multiple measurements and located in the time domain of the multiple echoes are generated, comprising the following steps:
• determining the amplitude of the signal echoes and storing the same;
• checking the amplitudes to see whether these lie in a fixed fluctuation range for the multiple echoes from the reference point or in a fixed fluctuation range for the level echoes; and
• registering the signal echoes lying in the fluctuation range for the level echoes as level signals, and determining the fill level from the associated propagation time while taking into account the speed of sound determined from the propagation time as far as the reference point.

2. Method according to Claim 1, **characterized in that** the fill level measurement is carried out on a fluid housing located in a vehicle.

3. Method according to Claim 1 or 2, **characterized in that** operations are carried out with a fixed fluctuation range for the multiple echoes from the reference point of +/- 20 mV.

4. Method according to one of the preceding claims, **characterized in that** operations are carried out with a fixed fluctuation range for the level echoes of 0 - 3 V.

5. Method according to one of the preceding claims, **characterized in that**, from the multiple echoes from the reference point, the amplitude evaluation is carried out only from the second echo onward.

## Revendications

1. Procédé de mesure du niveau d'un liquide dans un boîtier à l'aide d'un capteur à ultrasons, selon lequel la mesure est effectuée le long d'un tronçon de mesure sur lequel se trouve un point de référence, et selon lequel sont générés des échos multiples en référence au signal réfléchi par le point de référence et des échos de niveau, qui se trouvent dans la plage temporelle des échos multiples, en référence au signal réfléchi par le niveau de liquide, comprenant les étapes suivantes :
* détermination de l'amplitude des échos de signal et enregistrement de ceux-ci ;
* contrôle des amplitudes afin de vérifier si celles-ci se trouvent dans une plage de fluctuation définie pour les échos multiples du point de référence ou dans une plage de fluctuation définie pour les échos de niveau et
* détection des échos de signal qui se trouvent dans la plage de fluctuation des échos de niveau en tant que signaux de niveau et détermination du niveau à partir du temps de propagation associé en tenant compte de la vitesse du son déterminée à partir du temps de propagation jusqu'au point de référence.

2. Procédé selon la revendication 1, **caractérisé en ce que** la mesure du niveau est effectuée sur un boîtier à liquide qui se trouve dans un véhicule.

3. Procédé selon la revendication 1 ou 2, **caractérisé en ce qu'**il est exécuté avec une plage de fluctuation fixe de +/-20 mV des échos multiples du point de référence.

4. Procédé selon l'une des revendications précédentes, **caractérisé en ce qu'**il est exécuté avec une plage de fluctuation fixe de 0 - 3 V des échos de niveau.

5. Procédé selon l'une des revendications précédentes, **caractérisé en ce que** parmi les échos multiples du point de référence, l'interprétation de l'amplitude n'est effectuée qu'à partir du deuxième écho.
